# EUROPÄISCHE PATENTSCHRIFT

(11) **EP 0 764 899 B1**
(45) Veröffentlichungstag und Bekanntmachung des Hinweises auf die Patenterteilung: **12.06.2002**
(21) Anmeldenummer: 96114184.3
(22) Anmeldetag: 04.09.1996
(51) Int. Cl.: G06F 7/00, G06F 9/45

(54) **Verfahren zum Konvertieren sich unterscheidender Datenformate**
Method for converting data formats
Procédé pour la conversion de formats de données

(30) Priorität: 22.09.1995 DE 19535306
(43) Veröffentlichungstag der Anmeldung: 26.03.1997
(73) Patentinhaber: SIEMENS AKTIENGESELLSCHAFT, 80333 München (DE)
(72) Erfinder: Ahlers, Claus, 81477 München (DE); Heinrich, Werner, 80992 München (DE); Peifer, Jürgen, 81379 München (DE); Diessl, Georg, 82054 Sauerlach (DE); Walter, Gerhard, 85276 Pfaffenhofen (DE)

(56) Entgegenhaltungen:
- IEEE TRANSACTIONS ON SOFTWARE ENGINEERING, Bd. 21, Nr. 8, 1.August 1995, NEW YORK US, Seiten 651-661, XP000541238 NOVAK G S: "CONVERSION OF UNITS OF MEASUREMENT"
- COMPUTER JOURNAL, Bd. 36, Nr. 8, 1.Januar 1993, OXFORD, GB, Seiten 712-722, XP000420869 MUCHNICK V B ET AL: "F-CODE AND ITS IMPLEMENTATION: A PORTABLE SOFTWARE PLATFORM FOR DATA PARALLELISM"
- IEEE MICRO, Bd. 10, Nr. 3, 1.Juni 1990, LOS ALAMITOS, CA, USA, Seiten 9-21, XP000179275 JAMES D V: "MULTIPLEXED BUSES: THE ENDIAN WARS CONTINUE"
- DR.DOBB'S JOURNAL, Bd. 19, Nr. 13, November 1994, SAN MATEO, CA, USA, Seiten 44-51, XP000610640 J. GILLIG: "Endian-Neutral Software, Part 2"

## Beschreibung

Die Erfindung betrifft ein Verfahren gemäß Oberbegriff des Patentanspruchs 1.

Zeitgemäße Kommunikationssysteme sind als Multiprozessorsysteme ausgebildet. Dies bedeutet, daß eine Vielzahl von Prozessoren die Steuerung der systeminternen Vorgänge durchführen. In der Regel sind derartige Kommunikationssysteme als heterogene Systeme ausgebildet. Dies bedeutet, daß Prozessoren verschiedener Hersteller im Kommunikationssystem eingesetzt werden. Damit arbeiten aber diese Prozessoren auch nach herstellerspezifischen Standards.So werden beispielsweise Daten von den einzelnen Prozessoren in unterschiedlichen Formaten im jeweils zugeordneten Speicher abgelegt. Dies bedeutet solange keine Einschränkung des Betriebes, solange Programme, die in der Regel während ihres Ablaufes jeweils einem Prozessor zugeodnet sind, diese Daten aus dem betreffenden Speicher auslesen,verarbeiten und wieder in den Speicher einschreiben, da in diesem Fall stets dasselbe Datenformat verwendet wird. Probleme entstehen meist dann, wenn Nachrichten oder Daten zwischen Prozessoren bzw. auf diesen ablaufenden Programmen ausgetauscht werden, da hier gegebenenfalls diese Daten an die unterschiedlichen Datenformate angepaßt werden müssen.

So werden beispielsweise Daten, die auf Prozessoren der Motorola-Familie verarbeitet werden, von diesen in einem LSB_HI-Format (Least Significant Byte at Highest Address), auch Big-Endian-Format genannt, abgelegt. Im Gegensatz dazu werden Daten, die auf Prozessoren der Intel-Familie verarbeitet werden, von diesen in einem LSB_LO-Format (Least Significant Byte At Lowest Address),auch Little-Endian-Format genannt, abgelegt. Damit müssen nun im Falle eines Datenaustausches zwischen diesen beiden Prozessortypen die Daten in entsprechender Weise konvertiert werden.

Zur Lösung derartiger Probleme hinsichtlich unterschiedlicher Datenformate bei der Prozeßkommunikation in heterogenen Systemen wurde bisher ein spezielles Transferformat für den Austausch von Nachrichten und Daten festgelegt. Dies bedeutet, daß generell vor jedem Nachrichtenaustausch das prozessoreigene Format in ein vorher festgelegtes, lediglich zum Zwecke des Austausches von Nachrichten verwendetetes Übertragungsformat umgewandelt wird. Ist die Nachricht beim Zielprozessor angekommen, wird das Übertragungsformat in das dort verwendete prozessoreigene Format zurückverwandelt. Zu diesem Zweck wird beim Stand der Technik eine Bibliothek zur Verfügung ge - stellt, die Konvertierungsfunktionen für die Basisdatentypen derjeweiligen Programmiersprache enthält. Mit Hilfe dieser Formatkonvertierungen können dann die Übertragungsformate beim Austausch von Nachrichten zwischen Prozessoren festgelegt werden.

Weiterhin können bei verschiedenen Programmiersprachen wie beispielsweise CHILL vom Entwickler der Applikationssoftware Datenformate festgelegt werden, unter denen Daten abgespeichert werden. Diese Verhältnisse sind in "Language Solution for Mixed Data Formats, Mark Clark, G. Walter, fourth CHILL Conference, München 29.9. - 2.10.1986" dargelegt.

Problematisch an einer derartigen Vorgehensweise ist, daß die durch den Austausch von Nachrichten miteinander kommunizierenden Programme jeweils selbst für die Konvertierung der auszutauschenden Nachrichten zwischen prozessoreigenem Datenformat und Transferformat verantwortlich sind. Damit müssen aber alle benötigten Format-Konvertierungen vom Entwickler der Applikationssoftware bei der Codierung des jeweiligen Programmes explizit programmiert werden. Insbesondere sind Konvertierungen komplexer Datentypen (Strukuren, Arrays) explizit auf die durch die Bibliotheksfunktionen unterstützten Konvertierungen der Basisdatentypen abzubilden. Damit ist zwangsläufig sowohl ein erhöhter Entwicklungsaufwand als auch eine zusätzliche Fehlerquelle verbunden.Weiterhin besteht bei strikter Anwendungn dieser Technik das Problem, daß auch beim Versenden von Nachrichten zwischen Programmen,die auf Prozessoren mit ein- und demselben Datenformats ablaufen, die Konvertierungen vom prozessoreigenen Datenformat des Quellenprozessors in das Übertragungsformat und aus dem Übertragungsformat in das prozessoreigene Datenformat des Zielprozessors erfolgen. Dadurch wird die Dynamik des Systems beeinträchtigt.

Die Offenbarung IEEE TRANSACTIONS ON SOFTWARE ENGINEERING, Bd. 21, Nr. 8, 1.August 1995, NEW YORK US, Seiten 651-661, NOVAK G S: 'CONVERSION OF UNITS OF MEASUREMENT' beschreibt ein Verfahren zum Konvertieren sich unterscheidender Datentypen, die als Ergebnis eines durch ein Übersetzungsprogramm gesteuerten Übersetzungsvorgang in einen ablauffähigen Objektcode überführbar sind, und die gegebenenfalls unterschiedliche Datentypen in einem Programm aufweisende Daten bearbeiten, wobei letztere von einem ersten Datentyp in einem zweiten Datentyp überführbar sind.

Der Erfindung liegt die Aufgabe zugrunde, einen Weg aufzuzeigen, wie die Konvertierung von Datenformaten beim Austausch von Nachrichten oder Daten zwischen Prozessoren, in denen jeweils unterschiedliche Datenformate verwendet werden, ohne einen Dynamikverlust des Systems bei reduzierter Fehleranfälligkeit gestaltet werden kann.

Diese Aufgabe wird durch das in Anspruch 1 angegebene Verfahren gelöst.

Vorteilhaft an der Erfindung ist, daß bereits während des Übersetzungsvorgangs der Quellprogramme automatisch die für die Konvertierung der Daten zwischen den Formaten nötigen Prozeduren bereitgestellt werden. Dies wird erreicht, indem das Übersetzungsprogramm nach Maßgabe der in den Quellprogrammen verwendeten Datentypen Konvertierungsprozeduren während des Übersetzungslaufes erzeugt, die dann während des späteren Ablaufs der übersetzten Programme vor dem Nachrichtenaustausch aufgerufen werden. Damit ist der Vorteil verbunden, daß der Entwickler keinerlei explizite Vorsorge für die Konvertierung der Daten in der Applikationssoftware mehr vornehmen muß. Damit entfällt neben dem erhöhten Entwicklungsaufwand auch diese zusätzliche Fehlerquelle.

Weitere Ausgestaltungen der Erfindung sind in den Unteransprüchen gegeben:

Gemäß Anspruch 2 ist vorgesehen, daß die Konvertierungsprozedur als Sourcecode generiert wird, der in einem gesonderten Übersetzungslauf in den ablauffähigen Objektcode überführt wird.

Gemäß Anspruch 3 ist vorgesehen,daß bei mehrmaligem Auftreten desgleichen Datentyps für die zu überführenden Daten in einem Programm lediglich eine Konvertierungsprozedur generiert wird. Damit ist der Vorteil der Einsparung von Zeit bei der Übersetztung des Quellprogramms und von Speicherplatz verbunden.

Gemäß Anspruch 4 ist vorgesehen, daß im Falle, daß Daten zwischen Prozessoren mit gleichem Datenformat ausgetauscht werden, keine Konvertierungsprozedur generiert wird. Dies wird durch die explizite Markierung der entsprechenden Datentypen im Quellprogramm mit dem passenden Datenformat erzwungen. Damit ist der Vorteil einer erhöhten Dynamik des Systems verbunden.

Die Erfindung wird im folgenden anhand eines Ausführungsbeispiels näher erläutert.

Es zeigen:
- Figur 1: die im Kommunikationssystem verwendeten unterschiedlichen Datenformate am Beispiel des Basisdatentyps INTEGER
- Figur 2: das erfindungsgemäße Verfahren.

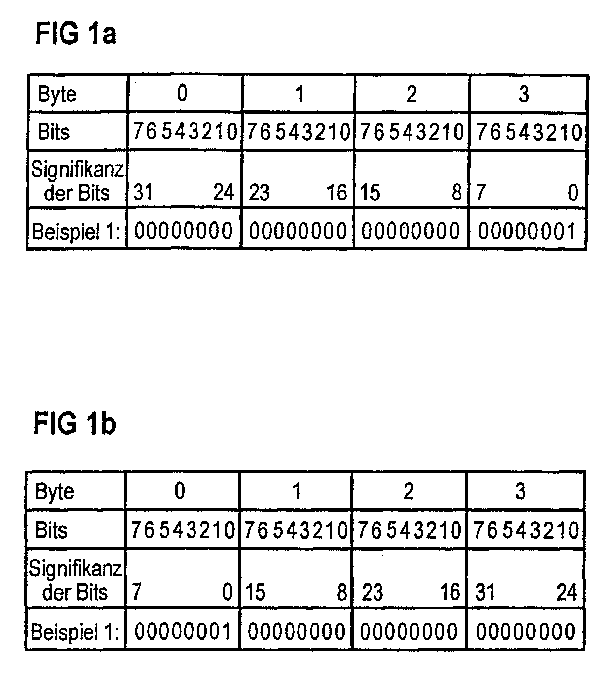

Figur 1 zeigt sich unterscheidende Datenformate, wie sie von den Prozessoren eines Kommunikationssystems beim Abspeichern verwendet werden. Dabei ist gemäß Fig.1a das Big-Endian-Format aufgezeigt. Beispielhaft sind hier vier Bytes, nämlich Byte 0, Byte 1, Byte 2, Byte 3 dargestellt. Jedes Byte weist jeweils acht Bit auf. Die Signifikanz der Bits wird beginnend mit Bit 0 von Byte 3 in aufsteigender Reihenfolge bis zu Bit 7 von Byte 0 definiert.Als Beispiel ist weiterhin aufgezeigt, wie die dezimale Zahl 1 in diesem Format darstellbar ist. Sie wird realisiert, indem das niederwertigste Bit, nämlich Bit 0 des Byte 3 gesetzt wird.

Gemäß Fig. 1b ist das Little-Endian-Format aufgezeigt. Hier ist die Signifikanz der Bits in der dort aufgezeigten Reihenfolge definiert. Als Beispiel wird die dezimale Zahl 1 definiert, indem das niederwertigste Bit, nämlich Bit 0 des Byte 0 gesetzt wird. Aus diesem Beispiel ergibt sich die unterschiedliche Definition beider Datenformate, sowie die Notwendigkeit einer Anpassung beider Datenformate beim Datenaustausch.

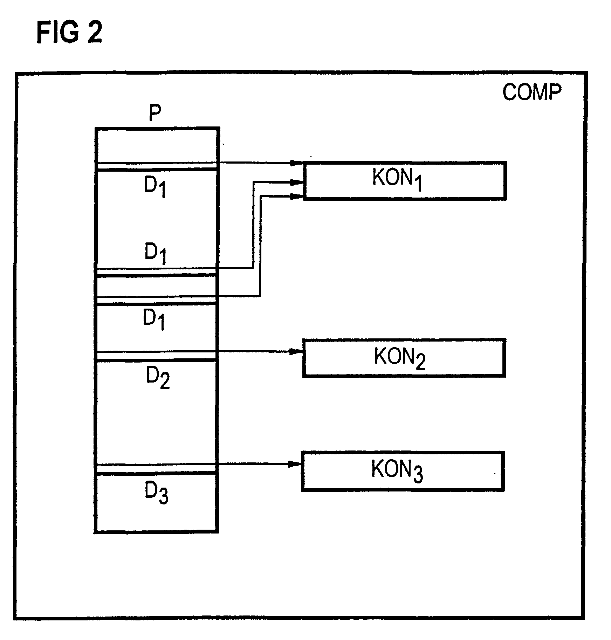

Gemäß Fig. 2 wird das erfindungsgemäße Verfahren erläutert. Dabei wird davon ausgegangen, daß die Konvertierungsvorgänge automatisch von einem Übersetzungsprogramm COMP während des Übersetzungsvorgangs gesteuert werden. Somit muß während der Codierungsphase keinerlei Vorsorge getroffen werden, wie und in welcher Weise die Konvertierung der Datenformate erfolgen soll. Weiterhin wird davon ausgegangen, daß ein zu übersetzendes Programm P sich unterscheidende Datentypen aufweist. Beispielhaft sollen dies die Datentypen D₁, D₂, und D₃ sein. Für das erfindungsgemäße Verfahren relevant sind komplexere Datentypen wie Strukturen oder Felder (Arrays), die es zu konvertieren gilt. Weiterhin wird in vorliegendem Ausführungsbeispiel davon ausgegangen, daß ein Datentyp, nämlich der Datentyp D₁, im Programm P mehrmals auftritt.

Während des Übersetzungsvorgangs werden unter der Steuerung des Übersetzungsprogramms COMP die Stellen im Code des Programms P, an denen Nachrichten zu anderen Programmen während des späteren Ablaufs gesteuert werden speziell behandelt. Es wird der Datentyp der Nachricht ermittelt, und im folgenden eine für die Überführung dieses Datentyps in das Datenformat des Zielprozessors adequate Konvertierungsprozedur generiert. Gemäß Fig.2 ist dies für den Datentyp D₁ die Konvertierungsprozedur KON₁. Die Prozedur selbst wird im Sourcecode unter einem definierten Prozedurnamen abgelegt. Anschließend wird vor dem den Nachrichtenaustausch bewerkstelligenden Befehl der Aufruf dieser Konvertierungsprozedur eingetragen. Im folgenden tritt der Datentyp D₁ jedoch noch zweimal auf. Beim erneuten Auftreten dieses Datentyps als Nachricht wird keine erneute Generierung der Konvertierungsprozedur KON₁ vorgenommen. Lediglich der Prozeduraufruf wird an den betreffenden Stellen eingefügt.

Gemäß Fig. 2 treten im folgenden die Datentypen D₂, D₃ als Nachrichten auf. Insofern müssen nun auch weitere, sich von der Konvertierungsprozedur KON₁ unterscheidende Konvertierungsprozeduren generiert werden. In vorliegendem Ausführungsbeispiel sollen dies die Konvertierungsprozeduren KON₂, KON₃ sein. Die Konvertierungsprozedur wird also durch den Datentyp definiert. Dem Datentyp D₂ wird somit die Konvertierungsprozedur KON₂ und dem Datentyp D₃ die Konvertierungsprozedur D₃ zugeordnet.

Beim späteren Ablauf des in den Objektcode überführten Programmes P werden somit unmittelbar vor dem Nachrichtenaustausch Aufrufe der betreffenden Konvertierungsprozeduren durchgeführt. Damit werden die zu übertragenden Daten in diejweiligen Datenformate des Zielprozessors umgewandelt.

In einer Ausgestaltung der Erfindung wird vorgesehen, daß für die Nachrichten, die zwischen Prozeßen ausgetauscht werden, die dasselbe Datenformat verwenden, vom Übersetzungsprogramm COMP keine Konvertierungsrozedur generiert wird.

Das vorstehend geschilderte Ausführungsbeispiel bescheibt den Nachrichtenaustausch zwischen Prozessoren mit sich unterscheidenden Formaten zum Abspeichern von Daten. Die Erfindung ist jedoch nicht auf dieses Ausführungsbeispiel beschränkt.

In einer weiteren Ausgestaltung wird vorgesehen, daß generell unterschiedliche Datenformate in einem Programm verwendet werden können. So lassen einige Programmiesprachen wie z.B. CHILL die explizite Angabe eines Datenformates durch den Programmierer zu. Dieses durch den Programmierer erzwungene Format kann sich durchaus von den prozessoreigenen Formaten unterscheiden. Während des Übersetzungsvorganges werden dann in oben angesprochenen Weise Konvertierungsprozeduren generiert und aufgerufen.

## Patentansprüche

1. Verfahren zum Konvertieren sich unterscheidender Datenformate, mit Programmen (P), die als Ergebnis eines durch ein Übersetzungsprogramm (COMP) gesteuerten Übersetzungsvorgang in einen ablauffähigen Objektcode überführbar sind, und die gegebenenfalls unterschiedliche Datentypen aufweisende Daten bearbeiten, wobei letztere von einem ersten prozessorspezifischen Format in ein zweites prozessorspezifisches Format überführbar sind,
**dadurch gekennzeichnet,**
**daß** unter der Steuerung des Übersetzungsprogramms (COMP) beim Übersetzungsvorgang der Datentyp der zu überführenden Daten ermittelt wird, woraufhin eine, diesem Datentyp adäquate Konvertierungsprozedur (KON₁...KON₃) zum Überführen von Daten vom ersten prozessorspezifischen Format in das zweite prozessorspezifisches Format oder umgekehrt generiert wird, und dem den Überführungsvorgang bewerkstelligenden Befehl ein Aufruf der betreffenden Konvertierungsprozedur (KON₁..KON₃) vorangestellt wird.

2. Verfahren nach Anspruch 1
**dadurch gekennzeichnet,**
**daß** Konvertierungsprozedur (KON₁...KON₃) als Sourcecode generiert wird, der in einem gesonderten Übersetzungslauf in den ablauffähigen Objektcode überführt wird.

3. Verfahren nach 1 oder 2,
**dadurch gekennzeichnet,**
**daß** bei mehrmaligem Auftreten desgleichen Datentyps für die zu überführenden Daten in einem Programm (P) lediglich eine Konvertierungsprozedur generiert wird.

4. Verfahren nach Anspruch 1 bis 3,
**dadurch gekennzeichnet,**
**daß** im Falle, daß Daten zwischen Prozessoren mit gleichem Datenformat ausgetauscht werden, keine Konvertierungsprozedur generiert wird.

## Claims

1. Method for converting differing data formats, using programs (P) which, as the result of a translation operation controlled by a translation program (COMP), can be transformed into an executable object code and which process data which may have different data types, these data being able to be transformed from a first processor-specific format into a second processor-specific format,
**characterized**
**in that**, during the translation operation, the data type of the data to be transformed is ascertained under the control of the translation program (COMP), and a conversion procedure (KON₁...KON₃) adequate for this data type is then generated in order to transform data from the first processor-specific format into the second processor-specific format, or vice versa, and a call to the relevant conversion procedure (KON₁...KON₃) is placed in front of the instruction performing the transformation operation.

2. Method according to Claim 1,
**characterized**
**in that** the conversion procedure (KON₁...KON₃) is generated as source code which is transformed into the executable object code in a separate translation pass.

3. Method according to Claim 1 or 2,
**characterized**
**in that**, if the same data type appears a plurality of times for the data to be transformed in a program (P) only one conversion procedure is generated.

4. Method according to Claim 1 to 3,
**characterized**
**in that**, if data are interchanged between processors using the same data format, no conversion procedure is generated.

## Revendications

1. Procédé pour la conversion de différents formats de données, avec des programmes (P), qui en résultat d'une procédure de traduction pilotée par un programme de traduction (COMP), peuvent être convertis en code objet exécutable et traitent le cas échéant les données présentant différents types, ces dernières pouvant être converties d'un premier format spécifique à un processeur en un deuxième format spécifique à un processeur,
**caractérisé en ce que**
sous la direction du programme de traduction (COMP), lors de la procédure de conversion, le type des données devant être converties est défini, à la suite de quoi, une procédure de conversion adéquate pour ce type de données (KON1 ... KON3) est générée pour la conversion de données à partir d'un premier format spécifique au processeur en un deuxième format spécifique au processeur, ou inversement et un appel de la procédure de conversion appropriée (KON1 ... KON3) précède la commande d'exécution de la procédure de conversion.

2. Procédé selon la revendication 1,
**caractérisé en ce que**,
la procédure de conversion (KON1 ... KON3) est générée en tant que code source, lequel est converti en code objet exécutable, au cours d'une procédure de traduction distincte.

3. Procédé selon la revendication 1 ou 2,
**caractérisé en ce que**
en cas d'occurrences multiples du même type de données pour les données devant être converties dans un programme (P), seule une procédure de conversion est générée.

4. Procédé selon la revendication 1 à 3,
**caractérisé en ce que**
dans l'éventualité où des données sont échangées entre des processeurs présentant le même format de données, aucune procédure de conversion n'est générée.
